# EUROPEAN PATENT APPLICATION

(11) **EP 4 283 576 A1**
(43) Date of publication of application: **29.11.2023**
(21) Application number: 23275082.8
(22) Date of filing: 25.05.2023
(51) Int. Cl.: G06V 20/58, B60R 1/00

(54) **OBJECT DETECTION SYSTEM AND A METHOD OF USE THEREOF**

(30) Priority: 26.05.2022 GB 202207744
(71) Applicant: Pro-Sight Vision, Barnsley Yorkshire S74 9LH (GB)
(72) Inventor: Hulme, Robert, Barnsley, S74 9LH (GB); Richardson, James, Barnsley, S74 9LH (GB); Brown, Lincoln, Barnsley, S74 9LH (GB)
(74) Representative: Corbyn, David Jonathan

(57) **Abstract**

The present invention provides an object detection system. The system includes an apparatus having first camera means provided to detect the occurrence of an object within a field of view of the first camera means, and second and third camera means in communication with one another, provided to resolve the distance and angle of the detected object relative to the apparatus. The present invention also provides a vehicle including such an object detection system.

## Description

The invention to which this application relates is an object detection system and a method of use thereof. The present invention also relates to a vehicle comprising such an object detection apparatus.

Pedestrian detection systems are employed in particular in road vehicles as an aid to alert the driver of a nearby pedestrian which who is within a certain proximity of the vehicle and may ultimately cross the path of the vehicle. Essentially, a number of computer sensors are provided located around the vehicle to detect people within a predefined distance. The onboard computer of the vehicle can then use this data to alert the driver of any close-by objects. Such sensors may also be used to aid in the parking of the vehicle.

Other, more advanced systems exist wherein the precise distance of a detected object may be discerned. FR2958774 (A1) discloses a system and method for detecting an object around a lorry using a stereoscopic camera to acquire 2D stereoscopic images and subsequently create a 3D disparity map from those images. The object can then be detected from that disparity map and classified accordingly. The 3D disparity map is projected on a vertical plane and a search for any object which detaches from the ground plane is carried out, ultimately detecting and highlighting any relevant objects, such as humans. Essentially, the system of FR2958774 (A1) serves to identify features which arise from the ground in the disparity map, as the ground is identified as the linear plane beneath the vehicle. Each potential object of interest is inspected by the software of the stereoscopic camera to identify whether or not it is a pedestrian.

Using this ground-up approach can be useful in some circumstances, however, problems do exist with such system, in particular when used by heavy goods vehicles (HGVs) or other industrial vehicles. For example, the nature of industrial vehicles is such that they may be required to carry loads of varying shapes and sizes, and in the case of fork lift trucks (FLTs), the loads being carried/held may further be done so at any given height depending on what is required at that time. Consequently, if for instance a pedestrian is situated on a raised walkway above the ground on which the vehicle is located (for example, raised by even just 0.5m), the detection methodology employed by the system and method of FR2958774 (A1) would not classify the pedestrian as required for detection/alert since they have not been deemed to detach from the ground plane. Given the ability of FLTs to rotate quickly, in the absence of "detection" of that pedestrian, there is a chance the load of the FLT could subsequently collide with them, causing potentially serious injury.

Another example would be instances where the pedestrian is on a raised walkway which gradually descends to become part of the ground plane. Only as the pedestrian locates on the ground plane and is consequently identified as a detachment therefrom, would the system detect them as a relevant object of interest and subsequently notify the driver of their presence. If the FLT is travelling at speed and the driver is unsighted as a consequence of the size and shape of the load being carried, the alert/ notification may arrive too late to avoid incident or accident. Other examples may include scenarios where a pedestrian is partially obscured or obstructed from camera view as they are, at the time of detection, behind an obstacle such as a stack of pallets. Utilizing the ground-up approach of FR2958774 (A1), the pedestrian may be entirely missed as the software would only initially recognize and classify the detect object as a "box" or other such item, and not a human. The reliance purely on stereo cameras and the creation of 3D disparity maps to detect pedestrians in potentially hazardous locations is therefore flawed and requires improvement.

It is therefore an aim of the present invention to provide an improved system for detecting an objection which overcomes the aforementioned problems associated with the prior art.

It is a further aim of the present invention to provide a vehicle fitted with an improved system for detecting an object which overcomes the aforementioned problems associated with the prior art.

It is yet a further aim of the present invention to provide an improved method of detecting an object which overcomes the aforementioned problems associated with the prior art.

According to a first aspect of the invention there is provided an object detection system, said system including an apparatus having:
first camera means provided to detect the occurrence of an object within a field of view of said first camera means; and
second and third camera means in communication with one another, provided to resolve the distance and angle of the detected object relative to the apparatus.

Typically, said first camera means are provided to classify the type of object which has been or is detected. Preferably, said first camera means is provided to detect humans and/or objects within its field of view.

Preferably, said system is located with or forms part of a vehicle. Typically, said vehicle is an industrial vehicle. Further typically, said vehicle is a fork lift truck (FLT).

In one embodiment, the system includes computing means, provided in communication with said first, second and third camera means. In one embodiment, said computing means may be provided in the apparatus. Typically, said computing means are arranged to receive and process visual data obtained by the first camera means to discern nature and type of a detect object and subsequently classify it. Typically, said computing means includes an open-source algorithm to process and classify said visual data. Preferably, said open-source algorithm is an algorithm known as "You Only Look Once" (YOLO).

Preferably, said computing means is arranged to determine if a detected object is an object of interest. For example, an object of interest may be defined to be a human or specific object, whereas if boxes, pallets, road cones etc. are detected, these may not be deemed to be objects of interest.

Typically, the field of view of the first, second and third camera means spans up to 160°. Typically, the depth of view or range of detection of the first, second and third camera means is up to 10m. Preferably, the depth of view or range of detection is up to 8m.

In one embodiment, the field and depth of view may be a user-defined area or region. For example, in some embodiments, the angle of the field of view may be narrowed and the depth of view and/or detection may consequently be increased, thereby enabling detection at a greater distance, which is particularly useful when travelling at speed, but within a more narrow or concentrated field of view.

In one embodiment, the computing means are further arranged to receive and process data obtained by said second and third camera means, and resolve and process the depth/distance and angle of a detected object.

Typically, said first, second and third camera means are arranged linearly with respect to one another and in the same horizontal plane as one another.

Typically, said second and third camera means are provided as separate and distinct camera means, in communication with one another via the computing means.

In one embodiment, said first, second and third camera means are located together in a first camera head. Typically, the first camera head has a field of view spanning up to 160°.

In one embodiment, a second camera head, comprising further, equivalent first, second and third camera means therein, is provided. Preferably, the second camera head is directed in a substantially opposing direction to that of the first camera head. Typically, the second camera head has a field of view spanning up to 160°.

Thus, in some embodiments, said detection system comprises first and second camera heads, each comprising first, second and third camera means and directed in first and second opposing directions, having a combined field of view of up to 320°.

In some embodiments, the first and second camera heads may be provided directed in substantially opposing directions, at an angle relative to one another, such that the respective fields of view of the first and second camera heads may contact or overlap with one another. Thus, typically, the combined field of view may be less than 320°.

In one embodiment, said first and second camera heads are positioned at an angle of at least 20° with respect to one another. Typically, said first and second camera heads are positioned at an angle relative to one another such that their respective fields of view contact or overlap with one another.

Preferably, said first camera means is provided to act as an object detection camera, and said second and third camera means are provided to act as left and right stereo cameras, respectively.

In one embodiment, said first camera means may be further arranged to detect and recognize speed limit signs. Typically, said computing means may be arranged to process information from said signs and communicate the same to a user, in use. Preferably, said information may be displayed on display means associated with the system, in use.

Typically, the system further includes data storage means. In one embodiment, said data storage means are located with the apparatus.

In one embodiment, communication means are provided associated with the system. Typically, said communication means enable the communication of data stored on data storage means associated with the system and/or real-time data obtained by the camera means to be transferred/communicated to a remote location.

In one embodiment, said first camera means are further arranged to record and save visual data of the detection and occurrence of an object to said data storage means.

In one embodiment, the system further includes an accelerometer. Typically, said accelerometer is in communication with said computing means. Further typically, said accelerometer is arranged to enable the system to adjust the field and depth of view of the first, second and third camera means according to the speed and movement of the apparatus, in use.

In one embodiment, said computing means is arranged to analyse each frame of visual data obtained by the first camera means to detect the occurrence of an object, in use. This consequently enables a higher level of accurate identification, in particular for partially obscured objects, and is not reliant on or restricted to a "ground-up" approach to detection, instead employed a whole image analysis approach.

Typically, said computing means includes machine-learning software, provided so as to ensure the detection and classification of detected objects is continuously learned and improved on. Typically, said software includes deep neural network image classification software.

In one embodiment, the system further includes notification and/or alert means, arranged to provide a visual and/or audio alert and/or notification on detection of an object deemed to be an object of interest.

In one embodiment, display means may be provided associated with the system. Typically, said display means may be arranged to provide a visual representation of the field of view of the first and/or second and third camera means. Further typically, said display means may be arranged to provide an indication of the location and proximity of a detected object.

In one embodiment, said computing means further includes image resizing and reshaping software. Typically, such software is arranged to enable visual data obtained from the first, second and third camera means to be aligned and overlaid, consequently enabling the provision of higher frame rate video data.

In one embodiment, said computing means further includes software arranged to, in real time, convert raw visual/video data acquired and stored on data storage means to MPEG-4 Part 14 (MP4) file format. Typically, said raw visual/video data is obtained in H.264 video coding format.

In another aspect of the present invention, there is provided an object detection system, said system including an apparatus having:
a first camera head directed in a first direction;
a second camera head directed in a second, substantially opposing direction to that of the first camera head;
wherein the first and second camera heads each comprise first camera means provided to detect the occurrence of an object within a field of view of said first camera means; and
second and third camera means in communication with one another, provided to resolve the distance and angle of the detected object relative to the apparatus.

Typically, the first and second camera heads each have a field of view spanning up to 160°, and a combined field of view of up to 320°.

In some embodiments, the first and second camera heads may be provided directed in substantially opposing directions, at an angle relative to one another, such that the respective fields of view of the first and second camera heads may contact or overlap with one another. Thus, typically, the combined field of view may be less than 320°.

In one embodiment, said first and second camera heads are positioned at an angle of at least 20° with respect to one another. Typically, said first and second camera heads are positioned at an angle relative to one another such that their respective fields of view contact or overlap with one another.

In another aspect of the present invention, there is provided a vehicle including an object detection system as described above provided thereon or therewith.

Typically, said vehicle is an industrial vehicle. Preferably, said vehicle is a fork lift truck (FLT).

In some embodiments, said vehicle includes first and second camera heads. Typically, said first and second camera heads are arranged to be directed in substantially opposing directions, at an angle relative to one another, such that the respective fields of view of the first and second camera heads may contact or overlap with one another.

In some embodiments, a third camera head may be included, comprising at least first camera means. Typically, said third camera head is located to provide a view from the vehicle in a direction which may otherwise be obscured when the vehicle is carrying a load. For example, where the vehicle is an FLT carrying a plurality of pallets, the view towards the front of the vehicle may be obscured or blocked to the driver. For safety, when FLTs are loaded, they should be driven in "reverse" providing the driver with a clear view of the surroundings. However, in some circumstances, forward movement may be required, generally when travelling up an incline. Typically, said third camera head is thus provided as an "impaired vision" camera head. In some embodiments, said third camera head an associated camera means are arranged to activate only when the vehicle is moving in the direction which the driver's view is obscured or blocked.

In other embodiments of the invention, the vehicle may be provided with a first camera head, comprising first camera means, and second and third camera means in communication with one another, and a second camera head arranged to act as an impaired vision "camera head", comprising at least first camera means.

In one embodiment, notification and/or alert means are provided with the vehicle, in communication with the object detection system and arranged to notify and/or alert a driver of the vehicle of a detection of an object, in use. Typically, said notification and/or alert means are provided in an interior of the vehicle and/or are arranged to be directed towards the driver, in use.

Typically, said notification and/or alert means are arranged to activate in a directional manner to signal to the driver the approximate direction and location of the detected object. That is to say, if for example, notification means are provided in the form of audio speakers in four corners of the cabin of an FLT, and an object of interest is detected forward and right of the vehicle, the front right speaker may activate to signal to the driver that the detected object is in that general direction.

In one embodiment, further notification and/or alert means may be provided associated with the vehicle, in communication with the object detection system and arranged to notify and/or alert the detected object of the vehicle's presence, in use. Typically, said further notification and/or alert means are provided on an exterior of the vehicle and/or are arranged to be directed outwardly of the vehicle, in use.

In one embodiment, the system includes an accelerometer, arranged to detect the speed and direction of movement of the vehicle, in use.

In another embodiment, the vehicle may include an accelerometer provided in communication with the object detection system.

Typically, said accelerometer is arranged to communicate real time data of the speed and direction of movement of the vehicle to the computing means, enabling the same to assess the relative position, location and direction of movement of the detected object, in use.

In one embodiment, said vehicle includes display means provided therein, in communication with or forming part of the objection detection system. Typically, said display means are arranged to provide a visual representation of the field of view of the first and/or second and third camera means, and provide an indication of the location and proximity of a detected object.

Typically, the system further includes data storage means. In one embodiment, said data storage means are located with the apparatus.

In one embodiment, communication means are provided associated with the system. Typically, said communication means enable the communication of data stored on data storage means and/or real-time data obtained by the camera means to be transferred/communicated to a remote location.

Thus, in some embodiments, various data and information may be collected by the system in relation to the usage of the vehicle, stored and transferred to a remote location, for example a centrally located server, for subsequent review and analysis. Such data may include any or any combination of: logging of driver habits; login of vehicle habits; shift monitoring; fleet management; and/or vehicle "not in motion" monitoring.

In another aspect of the present invention, there is provided a method of detecting and ascertaining the distance and position of an object using an object detection system, said method including the steps of:
detecting the occurrence of an object with first camera means within a field of view thereof;
utilizing second and third camera means, in communication with one another to resolve the distance and angle of the detected object, relative to the system.

In one embodiment, computing means are provided with the system. Typically, said computing means receives and processes visual data obtained from the first camera means, correcting any image distortion therein, discerning the nature and type of a detected object and subsequently classifying it. Typically, the processing of the visual data is achieved by use of an open-source algorithm known as "You Only Look Once" (YOLO).

Typically, after processing the visual data and classifying any object or objects detected, the computing means determines whether the detected object or objects is/are objects of interest. Preferably, said object of interest may be predefined with the computing means as humans or objects.

In one embodiment, said computing means is used to extract visual data from the second and third camera means. Typically, image distortion in visual data from the second camera means and image distortion in visual data from the third camera means are corrected by the computing means. Further typically, visual data from the second camera means and visual data from the third camera means are subsequently remapped to correspond with the visual data obtained by the first camera means.

In one embodiment, said first, second and third camera means are located together in a first camera head. Typically, a second camera head, comprising further, equivalent first, second and third camera means therein, is provided similarly to detect the occurrence of an object and resolve the relative distance and angle of said object.

Preferably, the second camera head is directed in an opposing direction to that of the first camera head, and each of said first and second camera heads have a field of view spanning up to 160°, and a combined field of view of up to 320°.

In one embodiment, if an object detected is determined to be an object of interest, the computing means subsequently creates a 3D disparity map to discern relative depth and angle information of the detected object. The present invention therefore in effect uses computer stereo vision, wherein the second camera means acts as a left stereo camera and the third camera means acts as a right stereo camera, resolving the distance and relative location of an object detected by the first camera means and deemed of interest. The first camera means utilizes whole image analysis to detect and identify the nature and type of object, which has significant advantages over similar systems in the prior art as the entire image is analysed, ensuring that even partially obscured or raised objects of interest are detected.

Typically, said computing means employs machine-learning software, ensuring the detection and classification of detected objects is continuously learned and improved on. Typically, said software includes deep neural network image classification software.

In one embodiment, if an object of interest is detected and a predetermined incident occurs in relation to said object, footage of said incident may be recorded and stored on data storage means provided or associated with the system. Typically, the recorded footage is set to begin a predetermined time period before the incident and cease a predetermined time period after the incident. Typically, said time period may be up to 20 seconds prior and after the incident. Preferably, said time period may be 10 seconds prior and after the incident.

In one embodiment, an incident may be defined as an object of interest being detected within a predetermined distance and/or arc/angle within the field of view of the camera means of the system. Typically, said predetermined distance and/or arc/angle within the field of view may be user-defined.

In one embodiment, the computing means in real time, converts raw visual/video data acquired and stored on data storage means to MPEG-4 Part 14 (MP4) file format. Typically, said raw visual/video data is obtained in H.264 video coding format and subsequently converted to MP4 file format.

Typically, said computing means includes image resizing and reshaping software, aligning and overlaying visual data obtained from the first, second and third camera means, thereby enabling the provision of higher frame rate video data.

In one embodiment, the system is configured to work in conjunction with an accelerometer provided therewith, wherein the computing means adjusts the field and depth of view according to the speed and direction of movement at which the system is travelling.

In one embodiment, upon detection of an object of interest, notification and/or alert means are provided which activate to notify and/or alert a person to the detection of the object. Typically, said person is a driver of a vehicle with which the system is located.

In one embodiment, upon detection of an object of interest, further notification and/or alert means are provided which activate to notify and/or alert the detected object of interest to the presence of a vehicle with which the system is located.

In one embodiment, display means are provided associated with the system, and the computing means sends to the display means a visual representation of the field of view of the first and/or second and third camera means. Typically, said display means provides an indication of the location and proximity of a detected object of interest.

In one embodiment, said first camera means may further detect and recognize speed limit signs, and said computing processes information from said signs to communicate the same to a user. Preferably, said information is displayed on display means associated with the system.

Embodiments of the present invention will now be described with reference to the accompanying figures, wherein:
Figure 1 illustrates a schematic of the components parts of an object detection system, in accordance with an embodiment of the present invention;
Figure 2 illustrates a plan view schematic of a vehicle having an object detection system located therewith and its field of view, in accordance with an embodiment of the present invention;
Figure 3 illustrates a plan view schematic of a vehicle having an object detection system located therewith and its field of view, in accordance with another embodiment of the present invention; and
Figure 4 illustrates a simplified flow diagram of a method of detecting an object using an object detection system, in accordance with an embodiment of the present invention.

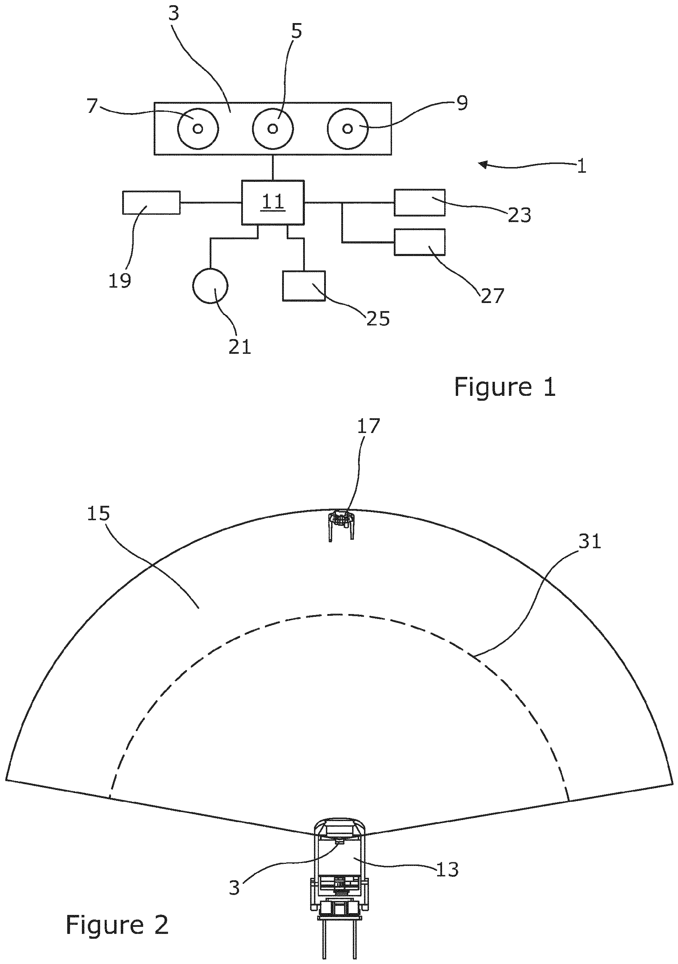

Referring now to the figures, in Figure 1 there is generally illustrated a schematic of an object detection system 1, which includes primarily a camera apparatus 3. The camera apparatus includes three cameras: a first, object camera 5 which is provided to detect the occurrence of an object within its field of view, and second and third cameras 7, 9 which are separate and distinct from one another though in communication with one another via computing means in the form of a central processing unit (CPU) 11 provided associated with the camera apparatus 3 as part of the system 1. The CPU 11 may be integrated into the camera apparatus 3 or be provided as a separate body connected to the apparatus 3. The second 7 and third 9 cameras act as left and right stereo cameras and are provided to resolve the distance and angle of the detected object relative to the camera apparatus 3. The three cameras 5, 7, 9 are provided within the camera apparatus 3 in a linear arrangement and in the same horizontal plane with respect to one another. After the first camera 5 has detected an object, the CPU 11 receives and processes the visual data collected by the camera 5 and goes on to determine the nature and type of the detected object, and subsequently classify it. the CPU 11 includes an open-source algorithm stored thereon, known as "You Only Look Once" (YOLO), which effectively conduct a whole-image analysis of the visual data to detect and resolve an object. Subsequently, it is then determined whether or not the detected object is an "object of interest". That is to say, the software employed by the CPU 11 identifies what the detected object is, and a previously user-defined set of objects may be classified as "objects of interest", for example, humans, animals, or other specifically defined objects and the like. If the detected object falls within this category, it is deemed "of interest". This ensures that in instances where boxes, pallets, road cones etc. are detected, these are not flagged as objects of interest. The whole image analysis performed by the CPU 11 on the visual/video data collected by the first camera 5 has distinct advantages over other object detection software packages, such as those which employ a ground-up analysis. This is particularly the case for partially obscured objects, which may not be detected if they are obstructed at ground level, for example. Further, this approach also differs fundamentally from the use of Lidar or Radar approaches.

Each of the second and third cameras 7, 9 obtain visual data and the CPU 11 extracts this data. Image distortion in the visual data from each camera are corrected by the CPU 11 software and subsequently remapped to correspond with the visual data acquired from the first camera 5. Consequently, with the second and third cameras 7, 9 acting as left and right stereo cameras, if an object detected is determined to be an object of interest, the CPU 11 takes the extracted data from the second and third cameras 7, 9 and creates a 3D disparity map to discern the relative depth and angle information of the detected object. The CPU 11 also includes image resizing and reshaping software, which enables visual/video data obtained from the first, second and third cameras 5, 7, 9 to be aligned and overlaid, consequently enabling the provision of higher frame rate video data. The CPU 11 further includes machine-learning software, ensuring the detection and classification of detected objects is continuously learned and improved on. The analysis software typically utilizes a deep neural network image classifier.

The system 1 itself is typically provided for use with or incorporated into a vehicle. Generally, the system is utilized in industrial vehicles such as fork lift trucks (FLTs), as depicted in Figure 2, which illustrates the FLT 13, the field of view 15 of the system 1 on the FLT, and an object of interest in the form of a person 17 to be detected. The field of view 15 of the cameras 5, 7, 9 typically spans up to 160° in angle, and the depth or range of view may be up to 10m. In some preferred embodiments, the depth or range of view may be limited to 8m. Within the maximum possible ranges, the actual field of view in some embodiments may be a specific user-defined region. Thus, if an object is detected within this field of view 15, the system 1 after detecting it determines whether or not it meets the criteria to be classified as an object of interest 17, while also computing the exact distance and position of the object 17. If it is determined to be of interest, then the 3D disparity map is subsequently created to pinpoint the location and track the object. The visual/video data obtained and the disparity maps which are subsequently created are stored on computer data storage means 19, which may be provided in various well-known forms.

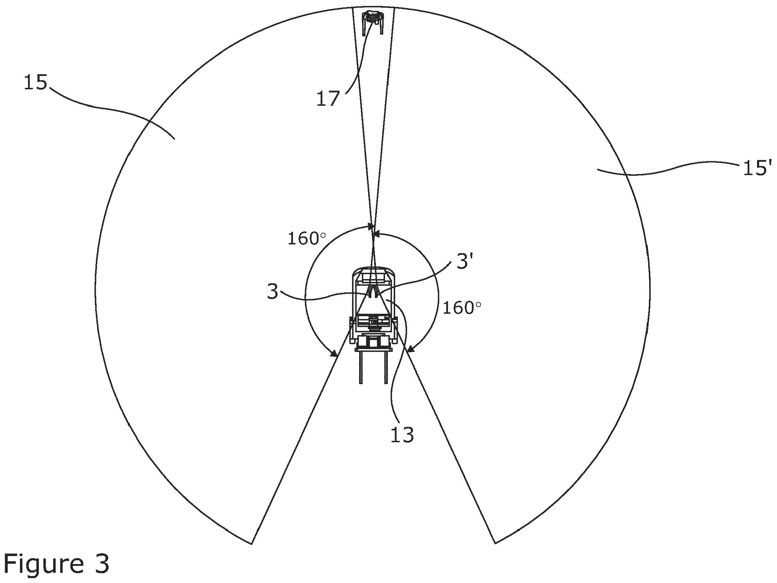

In a preferred embodiment of the present invention, the cameras 5, 7, 9 may be located in a single camera head or apparatus 3 and having a field of view spanning up to 160°. A second camera head or apparatus 3', including further, equivalent cameras, 5', 7', 9' may also be provided associated with the system 1, also having a field of view spanning up to 160°. The second camera head 3' is arranged such that it is directed in a substantially opposing direction from that of the first camera head 3 - essentially placing the two heads 3, 3' back-to-back, or in some embodiments, at a slight angle with respect to one another. This consequently may provide a detection system 1 having a combined field of view of up to 320°, and is shown in one example in Figure 3. The camera heads 3, 3' can be placed at an angle with respect to one another, and preferably at least 20°, such that their respective fields of view contact or overlap with one another. This can be particularly advantageous for industrial vehicles and in particular an FLT 13 wherein on most occasions, the vehicle will be moving around carrying a load which more often than not will be obstructing at least a part of the driver's view. The provision of a detection system 1 in the vehicle 13 having dual camera heads 3, 3' ensures as wide a coverage and detection as possible.

In some preferred embodiments of the invention, an accelerometer 21 may be provided as part of the system 1 or with the FLT 13 and subsequently connected to the system 1. Linking an accelerometer with the system 1 enables the CPU 11 to take into account the speed and direction of movement of the FLT 13 as it travels, and accordingly adjust the field of view 15 of the system 1 to accommodate the movement of the FLT 13. For example, if the FLT 13 increases the speed at which it is travelling, the system 1 will automatically scan and detect objects at a greater distance in order to increase safety and ultimately be able to provide adequate notification to a driver of the FLT 13 in sufficient time. Such notifications or alerts may be provided via the provision of notification or alert means with the system 1, or fixed in the vehicle and connected to the system 1. For example, the FLT 13 may be fitted with a number of interior speakers 23 or other audio means, which as an object of interest 17 is detected, may emit an audio alert to direct the driver's attention to the presence of the object 17. There may be provided a single interior speaker 23 or in some embodiments, multiple speakers 23 may be provided in the vehicle which are located in, for example, each corner of the driver cabin. The speakers 23 can then be arranged to be directional, which is to say that once the system has detected and ascertained the precise location of the object 17, which is forward and right of the vehicle, the front right speaker may activate to signal to the driver that the detected object 17 is in that general direction.

As a further aid for the driver of the vehicle, a display screen 25 may also be provided which displays a visual representation of the field of view 15 as seen by cameras 5, 7, 9 - or rather, the composite view as processed by the CPU 11. Alternatively, a graphical or plan view display of the relevant area/field of view may instead be presented. The detected object 17 can be clearly highlighted on the screen 25 and so the driver of the vehicle 13 will be clearly notified of their presence and location. The display screen 25 may also provide additional information as resolved by the CPU 11 such as the exact distance of the object 17 from the vehicle 13, and the relative direction of movement. In some embodiments, an additional speaker or speakers 27 may be provided to be located on the exterior of the vehicle 13. This speaker may be provided to act as an alert for the object 17 itself which has been detected, to notify them as to the presence of the vehicle 13.

The system 1 may further include communication means incorporated therewith, enabling it to communicate with a remote, third-party location. In particular, data which is acquired and stored on the data storage means 19 and/or real-time data obtained by the cameras 5, 7, 9 can be transferred/communicated to the remote locate, for example, a central server. Consequently, various data and information may be collected by the system 1 in relation to the usage of the vehicle 13, stored and transferred to a remote location for subsequent review and analysis. Such data may include any or any combination of: logging of driver habits; login of vehicle habits; shift monitoring; fleet management; and/or vehicle "not in motion" monitoring. Driver habit information may include driver reference identification, logging the telemetry data of the driver, determining whether a driver is more susceptible to near-misses / collisions than others. Vehicle habit information may include various vehicle telemetry data (acceleration, deceleration, pitch, roll, yaw), determining whether a particular vehicle is more susceptible to near-misses / collisions than others, and also monitoring any "not in motion" states, i.e., when the vehicle is in a live state but not in motion (idling). Time stamps may be included to monitor driver shift patterns. All this data may be utilised to effectively manage/maintain a fleet of vehicles.

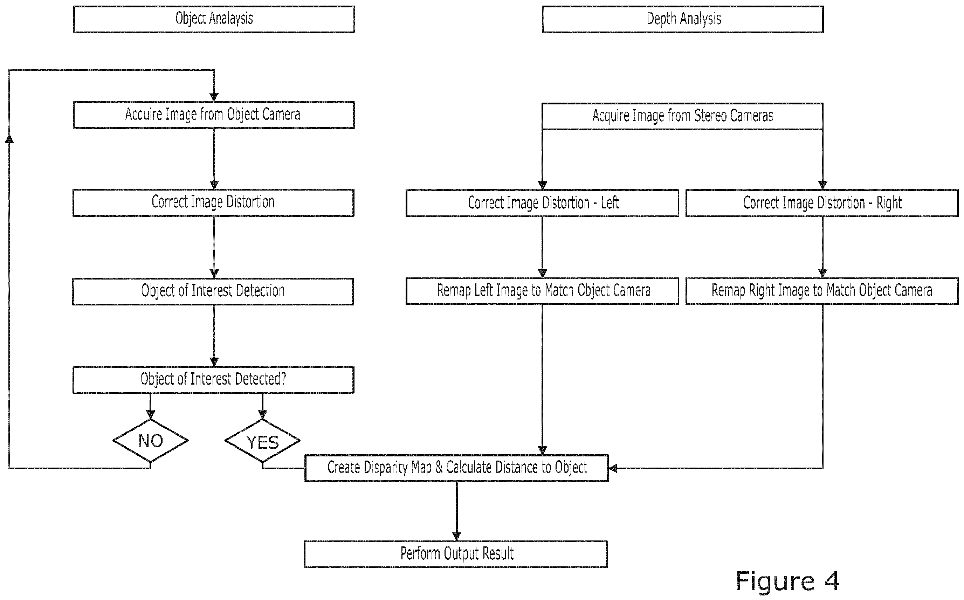

Thus, in use, if an object 17 is detected by the system 1 and is deemed to be "of interest" according to the predetermined user parameters, and an incident occurs, that is to say, the object 17 is detected and comes within a predetermined distance of the vehicle 13 and encroaches into a defined "critical alert region" 31, footage of the incident is recorded and stored on the data storage medium 19, which can be downloaded/transferred for review etc. as required. In order to ensure the whole incident is captured, the recorded footage which is subsequently stored can be set to begin a predetermined time period before the actual occurrence of the incident or event. For example, the stored footage may be set to begin up to 20 seconds prior to the incident and end up to 20 seconds after the incident. The original footage which is captured by the cameras will be in its raw format and is generally obtained in H.264 video coding format. The CPU 11 is provided with further software which enables it, in real time as the footage is being captured, to convert the raw visual/video data from H.264 video coding format to an MPEG-4 Part 14 (MP4) file format. This is achieved by converting each frame as it is captured by the object detection camera 5 from a standard RGB (3 channel colour) image into a YUV422 (1 channel image with colour data encoded) image. This YUV422 image is added into a rolling buffer of frames which contains up to 10 seconds of still image data (circa 300 frames). From the rolling buffer, each frame is converted into a compressed H.264 stream and passed through the system's "stream to video container" algorithm. This algorithm scans the incoming video data stream and performs live modifications of the raw stream to made it ready for encapsulating within an MP4 video container. As the raw data passes through the algorithm, pertinent information relating to the header and footer information of the output MP4 file is gathered. At the end of the rolling buffer collection the output video file is finalised and ready for exporting within 20-50 milliseconds of the completion of the proximity event/incident. Conversion to a more widely used and accessed MP4 file format means that the download/transfer and viewing of the footage is straightforward and can be played on most types of devices. Figure 4 illustrates a simplified flow diagram broadly highlighting the process the system 1 moves through when scanning for and detecting objects and discerning whether or not they are "of interest". An advantage of the system is that the object detection carried out by the first camera 5 is run simultaneously with the depth analysis data obtained by the second and third cameras 7, 9. If a detected object 17 is subsequently determined to be "of interest", then the 3D disparity map is created and the output sent to the display screen 25 and or speakers 23, 27.

The unique approach of the present invention is to analyse and identify any object of interest in the 2D plane. This involves an initial system sequence to remove any lens distortion from the images captured by the camera by remapping the location of each individual pixel in the image from its original position to a corrected flat perspective image position. This ensures: a stable 3D stereoscopic image provided by both stereo cameras suitable for creating a true disparity map spanning in excess of 160° horizontally; an object detector image without any image distortion to increase detection accuracy; and a mechanism to ensure that the spatial characteristics of both the object of interest and 3D cameras can be accurately aligned to each other.

Secondly, the analysis of the complete image is achieved by using a Deep Neural Network Image Classifier to inspect each image for the presence of complete and/or partial representations of the chosen object or objects of interest for detection. The system 1 analyses each image to gain detailed information on the object of interest 17 to determine the need for further computational measures for calculating the distance of the detected object of interest from the camera apparatus 3 or vehicle 13. When an object 17 has been identified as requiring 3D positional data, only then does the system create a 3D disparity depth map. As the object camera 5 and depth cameras 7, 9 are aligned to each other, the segmentation of the depth region that covers the detected object 17 is interrogated to determine the distance from the object to the camera apparatus 3. With the full positional data available for all objects of interest detected within the image, the system 1 subsequently provides the operator with a graphical display detailing the proximity of the object of interest in relation to the camera within up to a 160° operational field of view 15. In the event of an object of interest being detected within the user definable "critical alert region" 31, the system 1 will record the event for future review. Any critical alert will trigger a recording 20 seconds prior to and post of the event giving accurate information as to how and why each event took place. The event recording will be by direct stream conversion of the incoming still images into a compressed video format, which is then in turn remuxed in real time into an exportable video file format.

The system 1 is designed to "teach out" objects that are not objects of interest or that cause confusion within the detection of the object of interest, aided by the incorporation of the YOLO software. Due to the diverse and expandable nature of the deep neural network image classifier utilised in this invention, objects of interest selected for detection can vary vastly in size, orientation, colour and presentation. In the case of humans as the desired object for detection, the system 1 is able to detect independently of stance, height, build, clothing, clothing colour, obscured by other objects, and detection in low/high contrast environments. As both the object detector and 3D analysis operate in parallel, the system 1 is able to operate at an increased frame rate compared to a series process. The higher frame rate enables the system 1 to generate more images per second for analysis to achieve quicker detection rates. This decreases the response time when alerting the driver of the vehicle 13 of an object of interest 17 being detected. This high frame rate means the system 1 can analyse for a detection every 33 milliseconds, which allows for multi-frame detection and therefore greater accuracy of detection whilst still being able to report detections in "real time".

## Claims

1. An object detection system, said system including an apparatus having:
first camera means provided to detect the occurrence of an object within a field of view of said first camera means; and
second and third camera means in communication with one another, provided to resolve the distance and angle of the detected object relative to the apparatus.

2. A system according to claim 1, wherein said first camera means is provided to act as an object detection camera, and said second and third camera means are provided to act as left and right stereo cameras, respectively.

3. A system according to claim 1, wherein the system includes computing means, provided in communication with said first, second and third camera means, said computing means arranged to receive and process visual data obtained by the first camera means to discern nature and type of a detect object and subsequently classify it.

4. A system according to claim 3, wherein the computing means are further arranged to receive and process data obtained by said second and third camera means, and resolve and process the depth/distance and angle of a detected object.

5. A system according to claim 1, wherein said first, second and third camera means are located together in a first camera head, and a second camera head, comprising further, equivalent first, second and third camera means therein, is provided, the second camera head being directed in a substantially opposing direction to that of the first camera head.

6. A system according to claim 5, wherein the first and second camera heads are provided directed in substantially opposing directions, at an angle relative to one another, such that the respective fields of view of the first and second camera heads contact or overlap with one another.

7. A system according to claim 1, wherein communication means are provided associated with the system, said communication means arranged to enable the communication of data stored on data storage means associated with the system and/or real-time data obtained by the camera means to be transferred/communicated to a remote location.

8. A system according to claim 1, wherein the system further includes an accelerometer, said accelerometer in communication with said computing means and arranged to enable the system to adjust the field and depth of view of the first, second and third camera means according to the speed and movement of the apparatus, in use.

9. A system according to claim 1, wherein the system further includes notification and/or alert means, arranged to provide a visual and/or audio alert and/or notification on detection of an object deemed to be an object of interest.

10. A system according to claim 1, wherein display means are provided associated with the system, arranged to provide a visual representation of the field of view of the first and/or second and third camera means, and provide an indication of the location and proximity of a detected object.

11. A vehicle including an object detection system according to any of claims 1-10 provided thereon or therewith.

12. A vehicle according to claim 11, wherein said vehicle includes first and second camera heads, said first and second camera heads arranged to be directed in substantially opposing directions, at an angle relative to one another, such that the respective fields of view of the first and second camera heads may contact or overlap with one another.

13. A vehicle according to claim 12, wherein a third camera head is included, comprising at least first camera means, said third camera head being located to provide a view from the vehicle in a direction which may otherwise be obscured when the vehicle is carrying a load.

14. A vehicle according to claim 11, wherein the vehicle is provided with a first camera head, comprising first camera means, and second and third camera means in communication with one another, and a second camera head arranged to act as an impaired vision "camera head", comprising at least first camera means.

15. A vehicle according to claim 11, wherein notification and/or alert means are provided with the vehicle, in communication with the object detection system and arranged to notify and/or alert a driver of the vehicle of a detection of an object, in use, said notification and/or alert means provided in an interior of the vehicle and/or are arranged to be directed towards the driver, in use.
